# EUROPEAN PATENT APPLICATION

(11) **EP 3 357 661 A1**
(43) Date of publication of application: **08.08.2018**
(21) Application number: 18153393.6
(22) Date of filing: 25.01.2018
(51) Int. Cl.: B29C 41/46, B29C 41/32, B29C 41/38, F21V 15/01, B29C 41/28

(54) **A METHOD AND APPARATUS FOR MANUFACTURING HOUSINGS OF LIGHTING DEVICES, CORRESPONDING HOUSING OF LIGHTING DEVICES AND LIGHTING DEVICE**

(30) Priority: 06.02.2017 IT 201700012515
(71) Applicant: OSRAM GmbH, 80807 München (DE); OSRAM S.P.A. - SOCIETA' RIUNITE OSRAM EDISON CLERICI, 20126 Milano (IT)
(72) Inventor: RUGGIERI, Giuseppe, 31057 Cendon di Silea (Treviso) (IT); REISS, Martin, 93161 Sinzing (DE); BISCARO, Alessandro, 31050 Ponzano Veneto (Treviso) (IT); PEZZATO, Luigi, 31000 Treviso (IT)
(74) Representative: Marchitelli, Mauro

(57) **Abstract**

A method of manufacturing housings (12) of lighting devices, comprising:
- providing a profiled mold (16) having a molding seat (20),
- dispensing curable liquid material (21) into said molding seat (20),
- curing said curable liquid material (21) in said profiled mold (16) so as to form an elongated housing (12), and
- extracting said elongated housing (12) from said profiled mold (16).

## Description

### Technical Field

The present description relates to lighting devices.

One or more embodiments may refer to lighting devices employing electrically-powered solid-state light radiation sources, e.g. LED sources.

More specifically, one or more embodiments may concern a method and an apparatus for manufacturing housings for lighting devices.

### Technological Background

In the lighting sector the use is spreading of lighting devices or modules having an elongated shape, e.g. a ribbon-like shape, including an elongated, e.g. flexible module, whereon there can be mounted one or more solid-state, e.g. LED, light radiation sources. The elongated housing of such lighting devices may be of indefinite length and may have a generally channel-shaped cross section. Within the elongated module there may be arranged a light radiation source module, including one or more electrically-powered light radiation sources.

The elongated module may include a silicone material and/or may be manufactured via an extrusion process.

One of the problems of extrusion processes consists in the difficulty of achieving completely transparent housings for lighting devices. It would be possible to obtain completely transparent lighting device housings through the use of pure silicone. However, for the extrusion of silicone-based products, materials must be employed which contain up to 40% wt of additives. The additives for the extrusion process may reduce the transparency of the material, so that an extrusion process yields translucent or semitransparent housings, having a limited transparency to visible light.

A further problem of extrusion processes is the difficulty of obtaining housings of lighting devices with regions having different optical characteristics, e.g. different transparencies or different colours.

Moreover, the quality of the housings of lighting devices is often affected by extrusion marks, which are visible on the outer surfaces.

### Object and Summary

One or more embodiments aim at helping overcome the previously outlined drawbacks.

According to one or more embodiments, said object may be achieved thanks to a method and an apparatus for manufacturing housings of lighting devices having the features set forth in the claims that follow.

One or more embodiments may also refer to a corresponding housing for lighting devices, as well as to a corresponding lighting device.

The claims are an integral part of the technical teaching provided herein with reference to the embodiments.

One or more embodiments lead to the manufacturing of housings of lighting devices via a molding process, which envisages dispensing curable liquid material into a profiled mold, and curing the liquid material within the mould.

In one or more embodiments, the profiled mold may be implemented as a closed-loop belt.

One or more embodiments may offer one or more advantages, such as for example:
- high flexibility in manufacturing various models with different additives, e.g. transparent, reflective or colored profiles,
- different variants as regards the hardness of the silicone profiles which may be obtained with the same mold,
- possibility of obtaining silicone profiles having high transparency,
- possibility of manufacturing also small production volumes without extra costs and with short delivery times,
- virtually full control of the materials employed,
- high quality of the surface finish of the silicone profiles.

Moreover, one or more embodiments offer the possibility of manufacturing housings of lighting devices having regions with different optical characteristics, which may also be arranged in mutual alternation in cross section and/or along the length of the housing.

### Brief Description of the Figures

One or more embodiments will now be described, by way of non-limiting example only, with reference to the annexed Figures, wherein:
- Figure 1 is a schematic side view of an embodiment of an apparatus for manufacturing a housing of a lighting device,
- Figures 2a, 2b and 2c are schematic cross sections respectively along lines IIa-IIa, IIb-IIb and IIc-IIc of Figure 1,
- Figures 3a, 3b, 3c, 3d, 4a, 4b, 4c, 4d, 5a, 5b, 5c, 5d are schematic cross sections showing a possible manufacturing sequence of housings of lighting devices having regions with different optical characteristics,
- Figures 6a, 6b, 6c, 7a, 7b, 7c, 8a, 8b, 8c are schematic cross sections exemplifying the possibility of manufacturing housings having a complex shape, and
- Figures 9 and 10 are perspective views exemplifying the possibility of manufacturing housings of lighting devices having alternating regions with different optical characteristics.

It will be appreciated that, for clarity and simplicity of illustration, the various Figures may not be drawn to the same scale.

### Detailed Description

In the following description, various specific details are given to provide a thorough understanding of various exemplary embodiments. The embodiments may be practiced without one or several specific details, or with other methods, components, materials, etc. In other instances, well-known structures, materials or operations are not shown or described in detail in order to avoid obscuring various aspects of the embodiments.

Reference throughout this specification to "one embodiment" or "an embodiment" means that a particular feature, structure, or characteristic described in connection with the embodiment is included in at least one embodiment. Thus, the possible appearances of the phrases "in one embodiment" or "in an embodiment" in various places throughout this specification are not necessarily all referring exactly to the same embodiment. Furthermore, particular features, structures, or characteristics may be combined in any suitable manner in one or more embodiments.

The headings provided herein are for convenience only, and therefore do not interpret the extent of protection or scope of the embodiments.

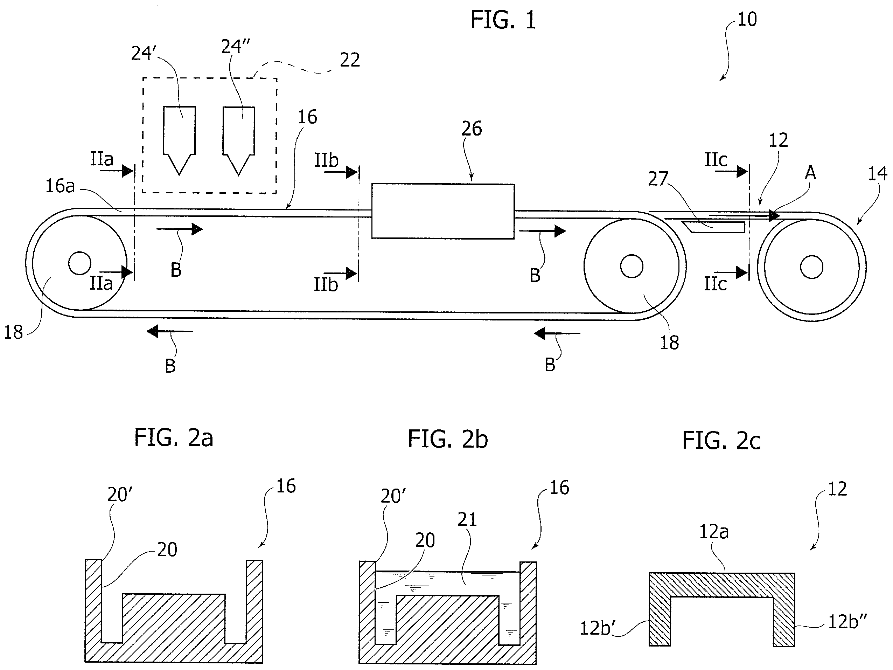

In Figure 1, reference 10 generally denotes an apparatus for manufacturing an elongated housing (or casing) 12 of a ribbon-shaped lighting device.

The elongated housing 12 may be flexible and may have an indefinite length in the direction of the longitudinal extension A thereof.

The elongated housing 12 is adapted to contain a light radiation source module, which may include a ribbon-shaped, e.g. flexible, support (substantially resembling a Printed Circuit Board, PCB), whereon there may be mounted one or more electrically-powered light radiation sources (e.g. solid-state light radiation sources, such as LED sources).

Such lighting devices (which may be named "flex" devices) are known in the art, which makes it unnecessary to provide a more detailed description thereof.

In one or more embodiments, the elongated module 12 may have a channel-shaped profile, as shown e.g. in Figure 2c, with a bottom wall 12a and two side walls 12b', 12b". The bottom wall 12a is adapted to support, within the channel-shaped profile, the lighting module, the light sources being arranged e.g. towards the open side of the channel-shaped profile of housing 12.

In one or more embodiments, device 10 may include a profiled mold 16 having, as shown e.g. in Figure 2a, a molding seat 20 with a profile complementary to the profile of housing 12. In one or more embodiments, the profiled mold 16 may be movable in the longitudinal direction A of the elongated module 12. In one or more embodiments, the profiled mold 16 may be a flexible belt of plastic material, which forms a closed-loop path on two pulleys 18 which move the profiled mold 16 in the direction denoted by arrows B in Figure 1. In one or more embodiments, the molding seat 20 of the profiled mold 16 may have an open side 20'. In one or more embodiments, the profiled mold 16 may have an upper straight branch 16a, along which the open side 20' of the molding seat 20 faces upwards.

In one or more embodiments, apparatus 10 may include a dispensing unit 22 for dispensing curable liquid material, e.g. liquid silicone, into the molding seat 20 of the profiled mold 16. The dispensing unit 22 faces towards the open side 20' of the upper straight branch 16a of the profiled mold 16, so as to dispense curable liquid material into the molding seat 20 through the open side 20' of the molding seat 20.

In one or more embodiments, the dispensing unit 22 may include two or more dispensing nozzles 24', 24" arranged for supplying, in different regions of the molding seat 20, respective curable liquid materials having different optical properties, e.g. having a different content of additives.

In Figure 2b, reference 21 denotes the curable liquid material filling the molding seat 20. In one or more embodiments, the curable liquid material 21 may fill the molding seat 20 of the profiled mold 16 while the latter moves with respect to the dispensing unit 22 in direction B.

In one or more embodiments, apparatus 10 may include a curing unit 26 arranged on the path of the profiled mold 16 downstream the dispensing unit 22. The curing unit 26 may be arranged so that the upper straight branch 16a of the profiled mold 16 passes through the curing unit 26 after the passage below the dispensing unit 22.

The curing unit 26 may be of any known type, e.g. it may be adapted to carry out the curing of the curable liquid material 21 by heating, photochemical reaction (e.g. via UV radiation) or through the addition of chemical additives. In one or more embodiments, the curing unit 26 may include, as a source of curing energy, a curing oven which heats the profiled mold 16 and the plastic material 21 contained therein to a curing temperature of the curable liquid material 21.

Downstream the curing unit 26, the material 21 contained in the molding seat 20 of the profiled mold 16 is in the solid state, thereby forming the elongated housing 12 of a lighting device.

In one or more embodiments, the apparatus 10 may include an extractor 27, in order to extract the elongated housing 12 from the profiled mold 16 downstream the curing unit 26. In one or more embodiments, the elongated module 12 extracted from the profiled mold 16 may be collected onto a reel 14, e.g. in order to be used in a reel-to-reel (R2R) process.

The surface of the molding seat 20 of the profiled mold 16 may be treated in order to prevent the adhesion of the cured material to the mold 16.

In one or more embodiments, the curable liquid material may have a viscosity of 200 - 50000 mPa*s, and after curing it may have a hardness of 10 - 100 Shore A.

In one or more embodiments, the curable liquid material may be optically clear silicone. In order to generate different optical characteristics, the curable liquid material 21 may be silicone containing additives such as diffusing particles, reflective particles or coloured pigments.

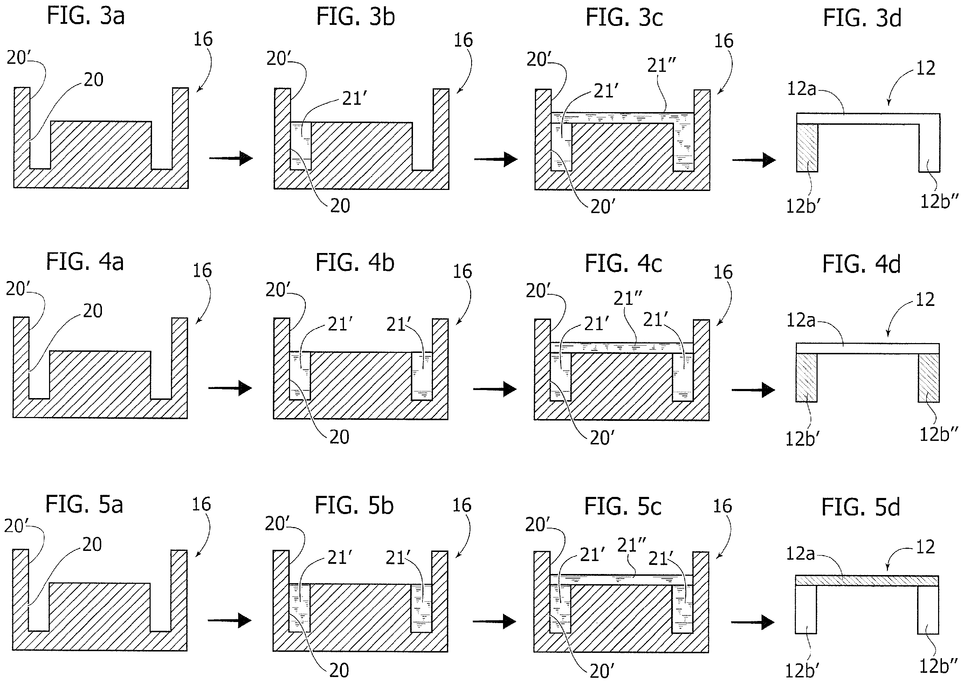

Figures 3-5 exemplify a procedure for the manufacturing of elongated housings 12, wherein the curable liquid materials 21', 21" differing from each other for at least one optical property (e.g. light permeability, colour etc.) are dispensed in different regions of the molding seat 20, e.g. in parts of the molding seat 20 which will form the first side wall 12b', the second side wall 12b" and the bottom wall 12a of the elongated housing 12.

In one or more embodiments, the dispensing nozzles 24', 24" supplying respective curable liquid materials 21', 21" may be spaced one from another in the moving direction of the profiled mold 16, so that, over one cross-section of the molding seat 20, a first curable liquid material 21' is first delivered in a first region of the cross-section portion and, subsequently, a second curable liquid material 21" is delivered in a second region of the same cross-section portion.

As shown in Figures 3d, 4d and 5d, it is therefore possible to obtain elongated housings 12 having side walls 12b', 12b" with different optical characteristics, or having side walls 12b', 12b" with optical characteristics differing from the bottom wall 12a.

In one or more embodiments, it is possible to envisage a partial or complete curing of a first curable liquid material 21' before dispensing a second curable liquid material 21". To this purpose, the apparatus 10 may be provided with a first curing unit downstream of a first dispensing nozzle, with a second dispensing nozzle downstream the first curing unit and with a second curing unit downstream the second dispensing nozzle 24".

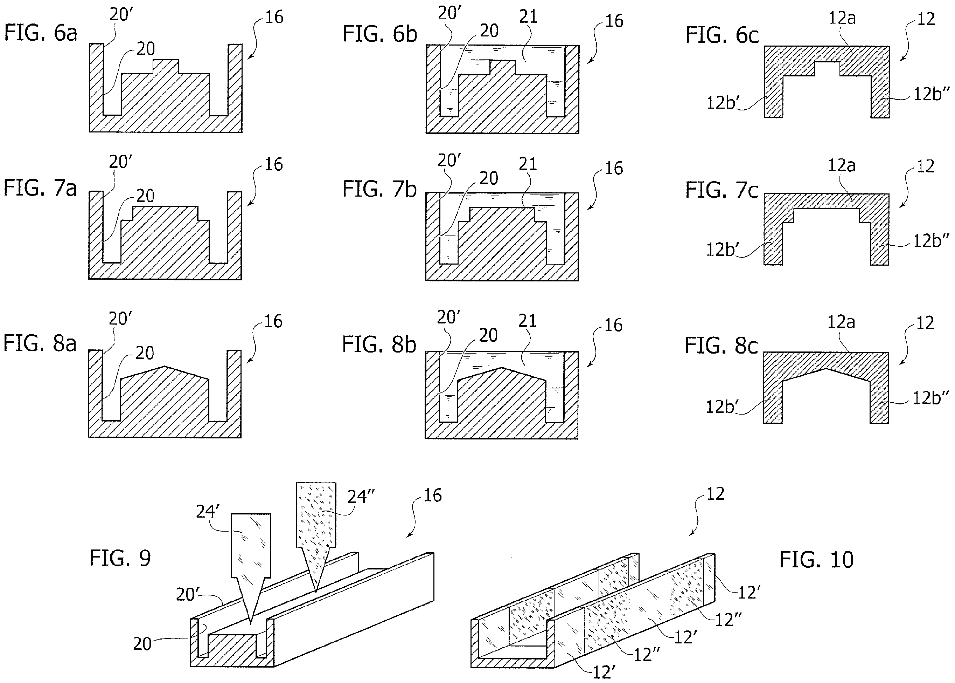

Figures 6 to 8 exemplify the possibility of manufacturing housings 12 having complex shapes. The shapes of the housings 12 shown in Figures 6c, 7c, 8c may be combined with the two-step forming process exemplified in Figures 3-5.

Figures 9 and 10 exemplify the possibility of forming, along elongated module 12, regions 12', 12" having different optical characteristics, in mutual alternation along the length of the elongated housing 12. To this end, the dispensing nozzles 24', 24" dispense, into the molding seat 20 of the profiled mold 16, curable liquid materials 21', 21" having different optical characteristics, and they may be operated intermittently so that, during the movement of the profiled mold 16, alternating regions in the longitudinal direction of the profiled mold 16 are alternatively filled with a first and with a second curable liquid material 21', 21" having different optical characteristics which, after curing, form regions 12', 12" having different optical characteristics of housing 12.

One or more embodiments of the method and apparatus described in the foregoing may lead to manufacturing an elongated housing 12 of a lighting device which includes an alternation of a first and of a second material, which differ in at least one optical characteristic, in a first and in a second region of the elongated housing 12. In one or more embodiments, the alternation of the first and of the second material may be present in a cross section of the elongated housing 12 (Figures 3d, 4d, 5d). In one or more embodiments, the alternation of the first and of the second material may be present a longitudinal direction A of the elongated housing 12 (Figure 10). In one or more embodiments, the alternation of the first and of the second material may regard both a cross section of the elongated housing 12 and a longitudinal direction A of the elongated housing 12.

One or more embodiments may therefore concern a device for manufacturing housings (e.g. 12) of lighting devices, comprising:
- providing a profiled mold (e.g. 16) having a molding seat (e.g. 20),
- dispensing curable liquid material (e.g. 21) into said molding seat,

- curing said curable liquid material in said profiled mold, forming an elongated housing, and
- extracting said elongated housing from said profiled mold.

One or more embodiments may include:
- dispensing curable liquid material into said molding seat via at least one dispensing source (e.g. 22), and
- providing a relative movement of said profiled mold and said at least one dispensing source during dispensing of said curable liquid material into said molding seat.

In one or more embodiments, said profiled mold may include a flexible belt movable (with respect to the at least one dispensing source) along a closed-loop path.

One or more embodiments may include selecting said curable liquid material out of: optically clear silicone, silicone containing diffusing or reflective particles, or silicone containing pigments.

In one or more embodiments, said curable liquid material may have a viscosity comprised between 200 - 50000 mPa*s and, after curing, a hardness comprised between 10 - 100 Shore A.

One or more embodiments may include:
- dispensing a first curable liquid material (e.g. 21') in a first region of said molding seat, and
- dispensing a second curable liquid material (e.g. 21"), different from said first curable liquid material, in a second region of said molding seat.

One or more embodiments may include selecting said first region and said second region as adjacent regions in the cross section of said profiled mold.

One or more embodiments may include selecting said first region and said second region as successive regions along the length of said profiled mold.

One or more embodiments may concern an apparatus for manufacturing housings of lighting devices, comprising:
- a profiled mold having a molding seat,
- a dispensing unit arranged for dispensing curable liquid material into said molding seat,
- a curing unit arranged for curing said curable liquid material in said profiled mold, forming an elongated housing, and
- an extractor arranged for extracting said elongated housing from said profiled mold.

In one or more embodiments, said dispensing unit may include at least a first and a second dispensing nozzle, arranged for dispensing respective curable liquid materials with different optical characteristics in respective regions of said molding seat.

In one or more embodiments, said profiled mold may include a flexible belt movable along a closed-loop path.

One or more embodiments may concern an elongated housing of lighting device having a longitudinal direction, wherein said elongated housing includes an alternation of a first material and a second material in a first region and a second region of said elongated housing, wherein the first and the second material are different for at least one optical property (e.g. light permeability, color etc.), and wherein the alternation of said first material and said second material is in a cross section of said elongated housing and/or in a longitudinal direction of said elongated housing.

One or more embodiments may concern an elongated housing according to one or more embodiments and at least one electrically-powered light radiation source, optionally a LED source, housed in said elongated housing.

Without prejudice to the basic principles, the implementation details and the embodiments may vary, even appreciably, with respect to what has been described herein by way of non-limiting example only, without departing from the extent of protection.

The extent of protection is defined by the annexed claims.

## Claims

1. A method of manufacturing housings (12) for lighting devices, comprising:
- providing a profiled mold (16) having a molding seat (20),
- delivering curable liquid material (21) into said molding seat (20),
- curing said curable liquid material (21) in said profiled mold (16) forming an elongated housing (12), and
- extracting said elongated housing (12) from said profiled mold (16).

2. The method of claim 1, including:
- delivering curable liquid material (21) into said molding seat (20) via at least one delivery source (22),
- providing a relative movement of said profiled mold (16) and said at least one delivery source (22) during delivery of said curable liquid material (21) into said molding seat (20).

3. The method of claim 2, wherein said profiled mold (16) includes a flexible belt movable along a closed-loop path.

4. The method of any of the preceding claims, including selecting said curable liquid material (21) out of: optically clear silicone, silicone containing diffusing or reflective particles, or silicone containing pigments.

5. The method of any of the previous claims, wherein said curable liquid material (21) has a viscosity comprised between 200 - 50000 mPa*s and after curing has a hardness comprised between 10 - 100 Shore A.

6. The method of any of the preceding claims, comprising:
- delivering a first curable liquid material (21') in a first region of said molding seat (20), and
- delivering a second curable liquid material (21") different from said first curable liquid material (21') in a second region of said molding seat (20) .

7. The method of claim 6, including selecting said first region and said second region as adjacent regions in the cross section of said profiled mold (16).

8. The method of claim 6, including selecting said first region and said second region as successive regions along the length of said section mold (16).

9. Apparatus for manufacturing housings (12) for lighting devices, comprising:
- a profiled mold (16) having a molding seat (20),
- a dispensing unit (22) arranged for dispensing curable liquid material (21) into said molding seat (20),
- a curing unit (26) arranged for curing said curable liquid material (21) in said profiled mold (16) forming an elongated housing (12), and
- an extractor (27) arranged for extracting said elongated housing (12) from said profiled mold (16).

10. The apparatus of claim 9, wherein said dispensing unit (22) comprises at least a first and a second delivery nozzle (24', 24'') arranged for dispensing respective curable liquid materials (21', 21") with different optical characteristics in respective regions of said molding seat (20).

11. The apparatus according to claim 9 or claim 10, wherein said profiled mold (16) includes a flexible belt movable along a closed-loop path.

12. An elongated lighting device housing (12) having a longitudinal direction (A), wherein said elongated housing (12) includes an alternation of a first material and a second material in a first region and a second region of said elongated housing (12), wherein the first and the second material are different for at least one optical property, and wherein the alternation of said first material and said second material is in a cross-section of said elongated housing (12) and/or in a longitudinal direction (A) of said elongated housing (12).

13. A lighting device comprising an elongated housing (12) according to claim 12 and at least one electrically-powered source of light radiation, preferably a LED light source, housed in said elongated housing (12).
